(19) Europäisches Patentamt

European Patent Office

Office européen des brevets

(11) **EP 0 751 019 B1**

(12) **EUROPEAN PATENT SPECIFICATION**

(45) Date of publication and mention
of the grant of the patent:
**17.04.2002 Bulletin 2002/16**

(51) Int Cl.$^7$: **B60C 23/06**

(21) Application number: **96110161.5**

(22) Date of filing: **24.06.1996**

(54) **A method and equipment for identifying a deflated tyre on a motor vehicle**

Verfahren und Ausrüstung zur Identifikation eines Reifens mit Druckverlust an einem Kraftfahrzeug

Procédé et équipement pour identifier un pneumatique dégonflé sur un véhicule automobile

(84) Designated Contracting States:
**DE ES FR GB SE**

(30) Priority: **26.06.1995 IT TO950531**

(43) Date of publication of application:
**02.01.1997 Bulletin 1997/01**

(73) Proprietor: **FIAT AUTO S.p.A.**
**10135 Torino (IT)**

(72) Inventors:
• **Cisternino, Maurizio**
**10132 Torino (IT)**
• **Cascio, Fulvio**
**10146 Torino (IT)**
• **De Cristofaro, Francesco**
**10090 Bruino, (Torino) (IT)**
• **Bargis, Erica**
**10141 Torino (IT)**
• **Ponti, Cesare**
**10051 Avigliana, (Torino) (IT)**

(74) Representative: **Quinterno, Giuseppe et al**
**Jacobacci & Partners S.p.A.,**
**Corso Regio Parco, 27**
**10152 Torino (IT)**

(56) References cited:
**EP-A- 0 466 535** **EP-A- 0 489 563**
**EP-A- 0 657 313**

## Description

The present invention relates to a method and equipment for detecting the presence of an at least partially deflated tyre on a motor vehicle with four wheels each fitted with a tyre.

More specifically, the subject of the invention is a method which includes the steps of:

measuring the angular velocity of each wheel and generating corresponding velocity signals or data; processing the velocity signals or data in a processing unit programmed to calculate the difference between the sum of the velocity signals or data relating to one pair of diagonally opposite wheels and the sum of the velocity signals or data relating to the other pair of wheels, and to generate an alarm signal indicating that a tyre is at least partially deflated when the difference is greater than a predetermined reference value; the sign of this difference being indicative of the diagonal on which the at least partially deflated tyre is located.

A method of this type is known, for example, from French Patent Application FR-A-2 568 519.

European Patent EP-B1-0 291 217 describes a method of this type in which, in order to identify the specific tyre which is at least partially deflated, the angular velocity signals or data for each tyre are compared with the average velocity for the four wheels and a signal is generated when the difference between the angular velocity of one wheel and the average angular velocity of the wheels exceeds a predetermined value.

Another method for identifying a deflated tyre is known from EP-A-0 466 535. This method is based on a first criterion for determining the diagonal wherein the deflated tyre is located, and a second criterion for precisely identifying the deflated tyre. The first criterion consists of the observation of a function of the squares of the speeds of the wheels. The second criterion consists of comparing the average longitudinal speeds of the wheels of the front axle with that of the wheels of the rear axle.

The object of the present invention is to provide an improved method and equipment which enables a specific tyre which is partially deflated to be identified reliably.

This object is achieved according to the invention by a method as claimed in claim 1 and by an equipment as claimed in claim 3; the method is characterised by the following additional operations:

the calculation, in the processing unit, of a predetermined number of successive values of the radii of curvature of the paths followed by the front and rear axles of the vehicle from a predetermined equation as a function of the angular velocities of the front and rear wheels respectively;

the comparison of the radii of curvature thus calculated for the front axle and the rear axle with respective predetermined reference values;

the counting, for each axle, of the number of the radius of curvature values which are less than their corresponding reference value;

the identification of the vehicle axle on which the partially deflated tyre is located as the axle for which the greater number of values of the radius of curvature were found to be less than the corresponding reference value, and

the generation of signals identifying the at least partially deflated tyre on the basis of the sign of the said difference and of the axle identified by means of the said additional operations.

The method of the invention enables the specific tyre which may be deflated to be detected, that is identified, by the identification both of the diagonal and the axle of the vehicle on which this tyre is located.

In order to identify the axle on which the deflated tyre is located, the invention relies on the fact that, when a tyre is deflated, the effective radius of rolling of the corresponding wheel is reduced and the angular velocity of this wheel increases relative to the angular velocity of the other wheel on the same axle of the motor vehicle, just as if this axle were travelling along a curved path. According to the invention, a given number of successive values of the radii of curvature (real or apparent) of the paths of the front and rear axles are thus calculated from a predetermined equation as a function of the angular velocities measured for the front and rear axles.

These values are then compared with respective predetermined reference values.

When the calculated radii of curvature are greater than the reference values, it is assumed that the paths of the vehicle's axles are substantially rectilinear. When, on the other hand, the calculated radii of curvature are less than the reference values, it is assumed that the vehicle's axles are following curved paths.

If there is a partially deflated tyre on one axle, the number of the radius of curvature values which are less than the reference value will be greater for that axle than for the other axle. It is thus possible to identify the axle having the deflated tyre.

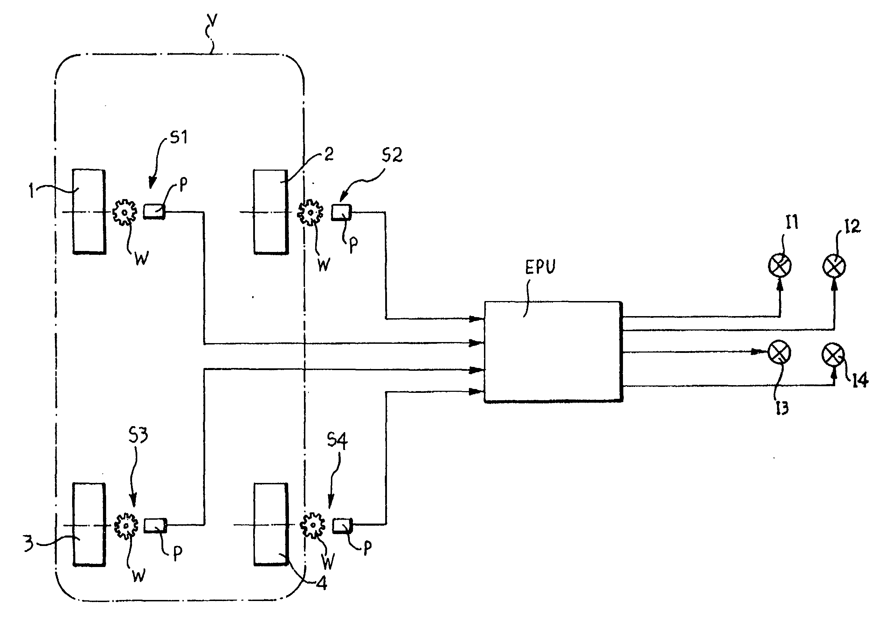

Additional characteristics and advantages of the present invention will become apparent from the detailed description which follows, provided purely by way of non-limitative example, with reference to the appended drawing which is a block diagram of a system which operates in accordance with the present invention.

In the appended drawing, a motor vehicle indicated V has four wheels 1,2,3 and 4 with respective tyres. Respective sensors of the so-called phonic wheel type, indicated S1 to S4 are associated with these wheels. In the embodiment illustrated, each of these sensors comprises essentially a toothed wheel W, rotatable with the corresponding vehicle wheel, and an associated magnetic pick-up P. The pick-ups P of the sensors S1 to S4 are connected to corresponding inputs of an electronic processing unit EPU.

It is convenient, though not essential, for the sensors S1 to S4 to be of the type currently used in anti-skid, or so-called ABS, systems. In a vehicle V fitted with such an anti-skid or ABS system, the sensors S1 to S4 can be the same ones as those used in the anti-skid system and the processing unit EPU may consist of the electronic control unit of the anti-skid system. This has the advantage that the system of the invention is integrated with the anti-skid system of the vehicle.

In any case, the electronic processing unit EPU consists conveniently of a microprocessor with associated memories and devices for interfacing with the sensors S1 to S4.

Indicator devices I1 to I4 are also connected to the processing unit EPU, each being associated with a respective wheel 1 to 4. For convenience, these indicator devices may be arranged in the instrument panel of the vehicle.

The processing unit EPU is programmed to receive signals transmitted by the sensors S1-S4 indicative of the angular velocities $\omega_1$, $\omega_2$, $\omega_3$, and $\omega_4$ of the vehicle's wheels and to process these signals in the manner described below.

The processing unit EPU calculates the difference between the sum of the angular velocities $\omega_1 + \omega_4$ of the diagonally opposite wheels 1 and 4 and the sum of the angular velocities $\omega_2 + \omega_3$ of the other two diagonally opposite wheels 2 and 3.

The absolute value of the difference thus calculated is compared with a predetermined reference value. If the difference is greater than the reference value, the processing unit EPU deduces that there is a tyre which is at least partially deflated in one of the two diagonals. In this event, the processing unit EPU is able to identify the diagonal on which the at least partially deflated tyre is located on the basis of the sign (negative or positive) of the calculated difference.

In parallel or in sequence with the operations described above, the processing unit EPU calculates a predetermined number of successive values of the radii of curvature of the respective paths of the front axle 1, 2 and of the rear axle 3, 4 of the motor vehicle.

These radii of curvature may be calculated, for example, from the following equation:

$$R = (V_r + V_l) \, C \, / \, 2 \bmod (V_r - V_l)$$

where R is the radius of the path of an axle measured between the centre of curvature of the path and the centre line of the axle, $V_r$ is the speed at which the right wheel advances, $V_l$ is the speed at which the left wheel advances, C is the track-width of the axle, that is, the distance between the wheels, and mod is an absolute value.

The processing unit EPU can calculate the speeds of advance $V_r$ and $V_l$ by multiplying the angular velocities of the right and left wheels respectively (transmitted by the sensors) by the nominal radii of these wheels.

The processing unit EPU may be programmed, for instance, to calculate one hundred successive values of the radii of curvature of the paths of the front and rear axles, corresponding, for example, to one hundred successive rotations of the wheels.

After having calculated the radii of curvature values, the processing unit EPU compares these values with a predetermined reference value of for example, 1km. In general, the reference value may be different for the front and back axles, for example to take into account any difference in the lengths of these two axles.

In particular, the processing unit EPU is also programmed to count the number of values of the radii of curvature which are less than the corresponding reference value for each axle and to identify the axle containing the partially deflated tyre as that for which the greatest number of radius of curvature values were less than the corresponding reference value.

At this point, having identified the diagonal and the axle on which the at least partially deflated tyre is located, the EPU activates the indicator device I corresponding to this tyre.

For convenience, so as to eliminate, or at least greatly reduce, the number of possible false indications, the processing unit EPU may be programmed to assume that there is an at least partially deflated tyre on one axle of the motor vehicle when the difference between the number of radius of curvature values that are smaller than the corresponding reference value for one axle and the number of corresponding values for the other axle exceeds a predetermined number.

Naturally, the principle of the invention remaining the same, the embodiments and manufacturing details thereof may be varied widely from those described and illustrated here purely by way of non-limitative example without departing thereby from the scope of the present invention as defined in the attached Claims.

**Claims**

1. A method for detecting the presence of an at least partially deflated tyre on a motor vehicle (V) with four wheels (1-4) each fitted with a tyre, including the steps of:

    measuring the angular velocity ($\omega_1$ - $\omega_4$) of each wheel (1-4) and generating corresponding velocity signals or data,
    processing the velocity signals or data in an electronic processing unit (EPU) programmed to calculate the difference between the sum of the velocity signals or data relating to one pair of diagonally opposite wheels (1, 4) and the sum of the velocity signals or data relating to the other pair of wheels (2, 3) and to generate an alarm signal indicating that a tyre is at least partially deflated when the said difference is greater than a predetermined reference value; the sign of this difference being indicative of the diagonal (1, 4; 2, 3) on which the at least partially deflated tyre is located;

the method being **characterised by** the following additional operations:

the calculation, in the processing unit (EPU), of a predetermined number of successive values of the radii of curvature (R) of the paths followed by the front axle (1, 2) and the rear axle (3, 4) of the motor vehicle (V) from a predetermined equation as a function of the angular velocities ($\omega_1$, $\omega_2$; $\omega_3$, $\omega_4$) of the front wheels (1, 2) and of the rear wheels (3, 4) respectively;

the comparison of the radii of curvature (R) thus calculated for the front axle (1, 2) and the rear axle (3, 4) with respective predetermined reference values;

the counting, for each axle (1, 2; 3, 4), of the number of values of the radii of curvature (R) which are less than their corresponding reference value;

the identification of the axle of the vehicle (V) on which a partially deflated tyre is located as that for which the greater number of values of the radii of curvature (R) were found to be less than the corresponding reference value, and

the generation of signals identifying the at least partially deflated tyre on the basis of the sign of the said difference and of the axle (1, 2; 3, 4) identified by means of the said additional operations.

2. A method according to Claim 1, **characterised in that** the said processing unit (EPU) calculates the difference between the number of radii of curvature (R) values which are less than their corresponding reference value for one axle (1, 2; 3, 4) and the corresponding number of values counted for the other axle (3, 4; 1, 2), and assumes that there is an at least partially deflated tyre on one axle (1, 2; 3, 4) of the vehicle (V) when this difference is greater than a predetermined value.

3. Equipment for detecting the presence of an at least partially deflated tyre on a motor vehicle (V) with four wheels (1-4) each with a tyre, including

sensor means (S1 - S4) for providing signals or data indicative of the angular velocity of each wheel (1-4), and
an electronic processing unit (EPU) connected to the sensor means (S1-S4) and programmed to calculate the difference between the sum of the velocity signals or data relating to one pair of diagonally opposite wheels (1, 4) and the sum of the velocity signals or data relating to the other pair of wheels (2, 3) and to generate an alarm signal indicating that a tyre is at least partially deflated when the said difference is greater than a predetermined reference value; the sign of the aforesaid difference being indicative of the diagonal (1, 4; 2, 3) on which the at least partially deflated tyre is located;

**characterised in that** the electronic processing unit (EPU) is also programmed

to calculate a predetermined number of successive values of the radii of curvature (R) of the paths of the front axle (1, 2) and the rear axle (3, 4) of the motor vehicle (V) from a predetermined equation as a function of the angular velocities $\omega_1$, $\omega_2$; $\omega_3$, $\omega_4$), measured for the front wheels (1, 2) and the rear wheels (3, 4);
to compare the radii of curvature (R) thus calculated for the front axle (1, 2) and for the rear axle (3, 4) with respective predetermined reference values;
to count the number of values of the radii of curvature (R) for each axle (1, 2; 3, 4) which are less than their corresponding reference value;
to identify the axle of the vehicle (V) on which the partially deflated tyre is located as that axle for which the greater number of the radii of curvature (R) values were less than the corresponding reference value, and
to generate signals identifying the at least partially deflated tyre on the basis of the sign of the said difference and of the identified axle.

4. Equipment according to the preceding Claim, **characterised in that** the electronic processing unit (EPU) is programmed to determine the difference between the number of the radii of curvature (R) values relating to one axle (1, 2; 3, 4) that are less than the reference value and the corresponding number of the radii of curvature values relating to the other axle (3, 4; 1, 2) and to assume that one axle (1, 2; 3, 4) of the motor vehicle (V) has an at least partially deflated tyre when this difference is greater than a predetermined number.

**Patentansprüche**

1. Verfahren zur Feststellung des Auftretens eines zumindest teilweise entleerten Reifens an einem Kraftfahrzeug (V) mit vier Rädern (1-4), wobei jedes mit einem Reifen versehen ist, welches Verfahren folgende Schritte umfasst:

Messen der Winkelgeschwindigkeit ($\omega_1$-$\omega_4$) eines jeden Rades (1-4) und Generieren korrespondierender Geschwindigkeitssignale oder Daten,

Verarbeiten der Geschwindigkeitssignale oder Daten in einer elektronischen Verarbeitungseinheit (EPU), die dazu programmiert ist, die Differenz zwischen der Summe der Geschwindigkeitssignale oder Daten eines Paares diagonal gegenüberliegender Räder (1, 4) und der Summe der Geschwindigkeitssignale oder Daten des anderen Räderpaares (2, 3) zu berechnen und ein Alarmsignal zur Anzeige eines zumindest teilweise entleerten Reifes zu generieren, wenn die besagte Differenz größer ist als ein vorbestimmter Referenzwert; wobei das Vorzeichen dieser Differenz anzeigt, an welcher der Diagonalen (1,4; 2,3) sich der zumindest teilweise entleerte Reifen befindet;

wobei das Verfahren durch die folgenden zusätzlichen Operationen **gekennzeichnet ist,**

die Berechnung einer vorbestimmten Anzahl aufeinanderfolgender Werte von Krümmungsradien (R) der von der Vorderachse (1,2) und der Hinterachse (3,4) des Kraftfahrzeuges (V) gefolgten Bahn über eine vorbestimmte Gleichung als eine Funktion der Winkelgeschwindigkeiten ($\omega_1,\omega_2,\omega_3,\omega_4$) der Vorderräder (1,2) bzw. der Hinterräder (3,4) durch die Verarbeitungseinheit (EPU);

dem Vergleich der errechneten Krümmungsradien (R) für die Vorderachse (1,2) und die Hinterachse (3,4) mit entsprechenden, vorbestimmten Referenzwerten;

für jede Achse (1,2; 3,4) die Zählung der Anzahl an Werten von Krümmungsradien (R), die geringer sind als ihre entsprechenden Referenzwerte;

die Identifizierung jener Achse des Fahrzeuges (V), an der sich ein teilweise entleerter Reifen befindet, als jene, bei der die größere Anzahl an Werten von Krümmungsradien (R), die kleiner sind als der entsprechende Referenzwert, gefunden wurde und

die Generierung von Signalen, die auf Basis des Vorzeichens der genannten Differenz und der durch die zusätzlichen Operationen identifizierten Achse (1,2; 3,4) den zumindest teilweise entleerten Reifen anzeigen.

2.    Verfahren gemäß Anspruch 1, **dadurch gekenn-**

**zeichnet, dass** die besagte Verarbeitungseinheit (EPU) die Differenz zwischen der Anzahl an Werten von Krümmungsradien (R), die kleiner sind als ihr entsprechender Referenzwert, für eine Achse (1,2; 3,4), und der entsprechenden Anzahl an Werten für die andere Achse (3,4; 1,2) berechnet, und annimmt, dass sich ein zumindest teilweise entleerter Reifen an einer Achse (1,2; 3,4) des Fahrzeuges (V) befindet, wenn die Differenz größer ist als ein vorbestimmter Wert.

3.    Vorrichtung zur Feststellung des Auftretens eines zumindest teilweise entleerten Reifens an einem Kraftfahrzeug (V) mit vier Rädern (1-4), wobei jedes mit einem Reifen versehen ist, umfassend Sensorvorrichtungen ($S_1$-$S_4$), um Signale oder Daten zu liefern, die auf die Winkelgeschwindigkeit eines jeden Rades (1-4) rückschließen lassen, und eine mit den Sensorvorrichtungen ($S_1$-$S_4$) verbundene elektronische Verarbeitungseinheit (EPU), die dazu programmiert ist, die Differenz zwischen der Summe der Geschwindigkeitssignale oder Daten eines Paares diagonal gegenüberliegender Räder (1,4) und der Summe der Geschwindigkeitssignale oder Daten des anderen Räderpaares (2,3) zu berechnen und ein Alarmsignal zu generieren, welches anzeigt, dass ein Reifen zumindest teilweise entleert ist, wenn die besagte Differenz größer ist als ein vorbestimmter Referenzwert; wobei das Vorzeichen der genannten Differenz anzeigt, an welcher Diagonale (1,4; 2,3) sich der zumindest teilweise entleerte Reifen befindet;
**dadurch gekennzeichnet, dass die** elektronische Verarbeitungseinheit (EPU) auch dazu programmiert ist,
eine vorbestimmte Anzahl aufeinanderfolgender Werte von Krümmungsradien (R) der von der Vorderachse (1,2) und der Hinterachse (3,4) des Kraftfahrzeugs (V) gefolgten Bahn über eine vorbestimmten Gleichung als eine Funktion der Winkelgeschwindigkeiten ($\omega_1$, $\omega_2$, $\omega_3$, $\omega_4$) der Vorderräder (1,2) und der Hinterräder (3,4) zu errechnen;
die Krümmungsradien (R), welche für die Vorderachse (1,2) und für die Hinterachse (3,4) errechnet wurden, mit entsprechenden vorbestimmten Referenzwerten zu vergleichen;
die Anzahl an Werten von Krümmungsradien (R), die kleiner sind als ihr entsprechender Referenzwert, für jede Achse (1,2; 3,4) zu zählen;
die Achse des Kraftfahrzeuges (V), an der sich der zumindest teilweise entleerte Reifen befindet, als jene Achse zu identifizieren, bei der die größere Anzahl an Werten von Krümmungsradien (R), die kleiner sind als der entsprechende Referenzwert, gefunden wurde und
Signale zu generieren, die auf der Basis des Vorzeichens der genannten Differenz und der identifizierten Achse den zumindest teilweise entleerten Reifen identifizieren.

**4.** Vorrichtung gemäß dem vorhergehenden Anspruch, **dadurch gekennzeichnet, dass** die elektronische Verarbeitungseinheit (EPU) dazu programmiert ist, die Differenz zwischen der Anzahl an Werten von Krümmungsradien (R), die kleiner sind als ihr entsprechender Referenzwert, für eine Achse (1,2; 3,4), und der entsprechenden Anzahl an Werten von Krümmungsradien für die andere Achse (3,4; 1,2) zu berechnen und anzunehmen, dass eine Achse (1,2; 3,4) des Kraftfahrzeuges (V) einen zumindest teilweise entleerten Reifen aufweist, wenn diese Differenz größer als ein vorbestimmter Wert ist.

## Revendications

**1.** Procédé de détection de la présence d'au moins un pneumatique partiellement dégonflé sur un véhicule à moteur (V) comportant quatre roues (1-4) munies chacune d'un pneumatique, comprenant les étapes suivantes :

la mesure de la vitesse angulaire ($\omega_1$-$\omega_4$) de chaque roue (1-4) et la création de données ou signaux correspondants de vitesse,
le traitement des données ou signaux de vitesse dans une unité électronique de traitement (EPU) programmée pour calculer la différence entre la somme des données ou signaux de vitesse relatifs à une première paire de roues opposées en diagonale (1, 4) et la somme des données ou signaux de vitesse relatifs à l'autre paire de roues (2, 3) et pour créer un signal d'alarme indiquant qu'un pneumatique est au moins partiellement dégonflé lorsque la différence dépasse une valeur prédéterminée de référence, le signe de cette différence étant représentatif de la diagonale (1, 4 ; 2, 3) sur laquelle se trouve le pneumatique au moins partiellement dégonflé,
le procédé étant **caractérisé par** les opérations supplémentaires suivantes :

le calcul, dans l'unité de traitement (EPU), d'un nombre prédéterminé de valeurs successives des rayons de courbure (R) des trajets suivis par l'essieu avant (1, 2) et l'essieu arrière (3, 4) du véhicule à moteur (V) à l'aide d'une équation prédéterminée qui est fonction des vitesses angulaires ($\omega_1$, $\omega_2$ ; $\omega_3$, $\omega_4$) des roues avant (1, 2) et des roues arrière (3, 4) respectivement,
la comparaison des rayons de courbure (R) ainsi calculés pour l'essieu avant (1, 2) et l'essieu arrière (3, 4) avec des valeurs prédéterminées respectives de référence,
le comptage, pour chaque essieu (1, 2 ; 3, 4), du nombre de valeurs des rayons de courbure (R) qui sont inférieures à la valeur correspondante de référence,
l'identification de l'essieu du véhicule (V) sur lequel se trouve un pneumatique partiellement dégonflé comme étant celui pour lequel le plus grand nombre de valeurs des rayons de courbure (R) ont été déterminées comme inférieures à la valeur correspondante de référence, et
la création de signaux identifiant le pneumatique au moins partiellement dégonflé d'après le signe de la différence et l'essieu (1, 2 ; 3, 4) identifié par les opérations supplémentaires.

**2.** Procédé selon la revendication 1, **caractérisé en ce que** l'unité de traitement (EPU) calcule la différence entre le nombre de valeurs de rayons de courbure (R) inférieures à la valeur correspondante de référence pour un premier essieu (1, 2 ; 3, 4) et le nombre correspondant de valeurs compté pour l'autre essieu (3, 4 ; 1, 2), et suppose qu'il existe un pneumatique au moins partiellement dégonflé sur un premier essieu (1, 2 ; 3, 4) du véhicule (V) lorsque cette différence est supérieure à une valeur prédéterminée.

**3.** Equipement de détection de la présence d'un pneumatique au moins partiellement dégonflé sur un véhicule à moteur (V) à quatre roues (1-4) munies chacune d'un pneumatique, comprenant

un dispositif capteur (S1-S4) destiné à transmettre des données ou signaux représentatifs de la vitesse angulaire de chaque roue (1-4), et

une unité électronique de traitement (EPU) connectée au dispositif capteur (S1-S4) et programmée pour le calcul de la différence entre la somme des données ou signaux de vitesse relatifs d'une première paire de roues opposées en diagonale (1, 4) et de la somme des données ou signaux de vitesse relatifs à l'autre paire de roues (2, 3) et la création d'un signal d'alarme indiquant qu'un pneumatique est au moins partiellement dégonflé lorsque cette différence dépasse une valeur prédéterminée de référence, le signe de la différence précitée étant représentatif de la diagonale (1, 4 ; 2, 3) sur laquelle se trouve le pneumatique au moins partiellement dégonflé,

**caractérisé en ce que** l'unité électronique de traitement (EPU) est aussi programmée pour

le calcul d'un nombre prédéterminé de valeurs successives des rayons de courbure (R) des trajets de l'essieu avant (1, 2) et de l'essieu arrière (3, 4) du véhicule à moteur (V) à l'aide d'une équation prédéterminée qui est fonction des vitesses an-

gulaires ($\omega_1$, $\omega_2$ ; $\omega_3$, $\omega_4$) mesurées pour les roues avant (1, 2) et les roues arrière (3, 4),

la comparaison des rayons de courbure (R) ainsi calculés pour l'essieu avant (1, 2) et pour l'essieu arrière (3, 4) à des valeurs prédéterminées respectives de référence,

le comptage du nombre de valeurs des rayons de courbure (R) pour chaque essieu (1, 2 ; 3, 4) qui sont inférieures à la valeur correspondante de référence,

l'identification de l'essieu du véhicule (V) sur lequel se trouve le pneumatique partiellement dégonflé comme étant l'essieu pour lequel le plus grand nombre de valeurs des rayons de courbure (R) est inférieur à la valeur correspondante de référence, et

la création de signaux identifiant le pneumatique au moins partiellement dégonflé d'après le signe de la différence et l'essieu identifié.

4. Equipement selon la revendication précédente, **caractérisé en ce que** l'unité électronique de traitement (EPU) est programmée afin qu'elle détermine la différence entre le nombre de valeurs de rayons de courbure (R) relatifs à un premier essieu (1, 2 ; 3, 4) qui sont inférieures à la valeur de référence et le nombre correspondant des valeurs de rayons de courbure relatifs à l'autre essieu (3, 4 ; 1, 2) et pour qu'elle détermine qu'un essieu (1, 2 ; 3, 4) de ce véhicule à moteur (V) a au moins un pneumatique partiellement dégonflé lorsque cette différence dépasse un nombre prédéterminé.